# EUROPEAN PATENT SPECIFICATION

(11) **EP 1 731 805 B1**
(45) Date of publication and mention of the grant of the patent: **14.10.2009**
(21) Application number: 06460013.3
(22) Date of filing: 16.05.2006
(51) Int. Cl.: F16K 1/22

(54) **Disc of a butterfly valve and method to manufacture**
Klappe eines Klappenventils und Verfahren zur Herstellung
Disque d'une vanne à papillon et procédé de fabrication

(30) Priority: 17.05.2005 PL 37517705
(43) Date of publication of application: 13.12.2006
(73) Proprietor: AFT Sp. z o.o, 61-622 Poznan (PL)
(72) Inventor: Spalony, Wojciech, 61-622 Poznan (PL)
(74) Representative: Ciupinski, Zbigniew

(56) References cited:
- DE-A1- 10 317 505
- FR-A- 815 356
- FR-A1- 2 845 946
- JP-A- 5 044 521
- JP-A- 61 105 373
- JP-A- 63 190 979

## Description

The invention consists of the method of manufacture of and a throttle disc. The throttle is used as a cutoff or control element in media supply systems.

The throttle disc is usually produced in one piece through founding from cast iron or steel. The throttle disc of minor diameter may be manufactured by forging. The surface, particularly in the disc periphery, is treated by machining.

A method of manufacture of a switching flap from a Polyaryletherketon (PAEK) or one of its derivatives is known from DE 103 17 505 A1.

A throttle disc of circular shape and lenticularly convex has been known. It is made in the form of a monolith and has coaxial holes, one often with square section serving for mounting of a driving shaft inside, and the other for mounting of a supporting axle. The disc surface in the parts of its periphery in vicinity of the holes is spherical or plane. The driving shaft and the supporting axle, coaxial in the throttle disc, are mounted in a casing, the inner surface of which is lined with an elastomere lining or with other kind of packing.

Switching device for a flow channel comprising a switching flap made of a Polyaryletherketon (PAEK) or its derivatives, known from DE 103 17 505 A1, consists of two adjacent void cavity forming bowls in an inlet channel of an internal combustion engine.

The throttle disc, particularly this of high diameter, is of considerable weight. Machining is time-consuming and requires specialised machines and tools.

The method of manufacture of the throttle disc according to the invention is characterised by forming from a sheet of specified metal, through its plastic shaping, two identical convex envelopes, in periphery circular in shape with recesses. Between these envelopes and in the recesses sleeves and a reinforcement gang are mounted, which consists of a distance pipe with ribs fastened, and a bush centralizer and a driver sleeve mounted at its ends. This set comprising of two convex envelopes and the sleeves and reinforcement gang is bound permanently together. Afterwards the void between the convex envelopes is forced filled through one of the sleeves with respective filling, particularly on the basis of resins.

The throttle disc according to the invention of circular shape and lenticularly convex is
characterised by two identical convex envelopes permanently bound together at their periphery. The envelopes are also permanently bound with sleeves and a reinforcement gang. This gang comprises of a driver sleeve and a bush centralizer, mounted between the envelopes on a distance pipe. Ribs are fastened to the distance pipe, which also has holes that enable the filling composition to flow. The whole void limited by the envelopes is filled with respective filling, particularly on the basis of resins.

The throttle disc according to the invention is characterised by smaller weight and lower cost of
manufacture. Plastic working of two symmetrical envelopes results in die stampings of high accuracy of dimensions, which eliminates machining of the final product. Shaping of the face surfaces of the bush centralizer and the driver sleeve and control of tolerated distance between these surfaces, executed before permanent binding of these envelopes and the sleeves and reinforcement gang, ensures required accuracy.

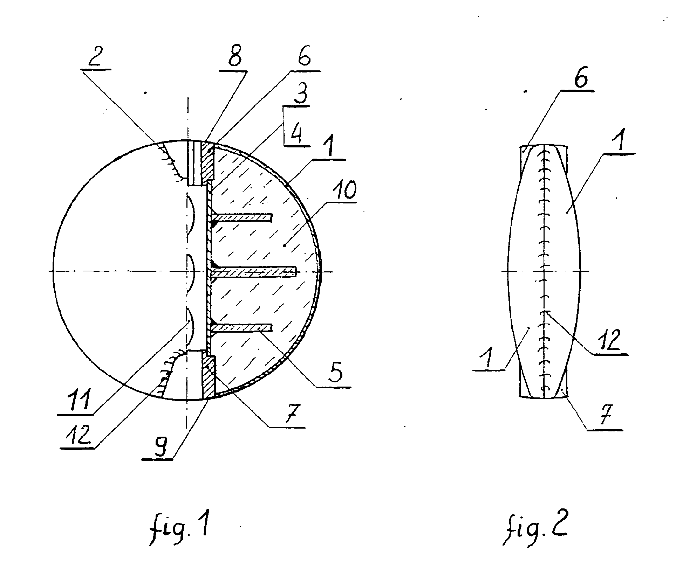

The object of the invention and the example of its accomplishment are presented in the figure,
where fig. 1 shows front view of the throttle disc with partial intersection, and fig. 2 shows lateral view of the throttle disc.

### Example I

Two identical envelopes 1 in the shape of die stampings with recesses 2 are forged in a die from a
sheet of steel with thickness dependent of the disc diameter and required rigidity. Between these envelopes in the recesses 2 sleeves and a reinforcement gang are mounted. The sleeves and reinforcement gang consists of a distance pipe 4 with ribs 5 fastened by welding, further mounting a driver sleeve 6 and a bush centralizer 7 at the ends of the reinforcement gang. The sleeves 6, 7 have front surfaces spherically shaped. Before assembling the tolerated distance between front surfaces 8, 9 of both sleeves is examined and the length of the distance pipe or of the sleeves is corrected. The envelopes 1 are tightened and welded in periphery. The edges of recesses 2 are also welded with the driver sleeve 6 and the bush centralizer 7. Hereafter the polymer concrete 10 is introduced into the void between the envelopes through one of the sleeves and the holes 11 in the distance pipe 4. After final hardness of the polymer concrete that fills whole inside of the disc is reached, the disc is ready for mounting in the throttle.

### Example II

The method of manufacture of the throttle disc as in the Example I, but into the void between the envelopes 1 a glass fibre with resin 10 is introduced.

### Example III

The throttle disc comprises of two identical metallic envelopes 1 with sleeves and reinforcement gang 3 mounted in the recesses 2. This gang comprises of a distance pipe 4 with ribs 5 fastened by welding, and a driver sleeve 6 and a bush centralizer 7. The distance pipe 4 has holes 11. The envelopes 1 are bound together with the driver sleeve 6 and the bush centralizer 7 with welds 12. The sleeves face surfaces 8, 9 are spherical. The throttle disc is filled with a mixture of quartz and resin 10.

## Claims

1. The method of manufacture of a throttle disc by forming from a sheet of optional metal, through its plastic shaping, two symmetrical convex envelopes (1), in periphery circular in shape with recesses (2), and mounting between these envelopes sleeves and a reinforcement gang (3), which consists of a distance pipe (4) with ribs (5) further mounting a driver sleeve (6) and a bush centralizer (7) at the ends of the reinforcement gang (3), and tightening the envelopes (1) together with the sleeves and reinforcement gang (3) and bounding permanently together the sleeves and reinforcement gang (3), then filling the whole void limited by these envelopes (1) through one of the sleeves (6, 7) and through holes (11) in the distance pipe (4) with respective filling (10), particularly on the basis of resins.

2. The throttle disc lenticularly convex and of circular shape with coaxial openings for mounting inside of a driving shaft and of a supporting axle, **characterised by** that it comprises of two symmetrical envelopes (1) bound permanently together with sleeves and a reinforcement gang (3), which consists of a distance pipe (4) with holes (11) and fastened ribs (5), a driver sleeve (6) and a bush centralizer (7), mounted between the envelopes (1) on the distance pipe (4), and the void between the envelopes (1) filled with respective filling (10), particularly on the basis of resins.

## Patentansprüche

1. Herstellungsverfahren der Klappe eines Klappenventils zeichnet sich **dadurch** aus, dass aus einem Blech beliebiger Stoffart im Druckfüllen zwei symmetrische Schalen (1) gebildet werden, die im Umfang die Form eines Kreises mit Ausnehmungen (2) haben, wobei zwischen den Schalen eine Hülsen-Armierungs-Gruppe (3) angebracht wird, die ein Abstandsrohr (4) mit Rippen (5) beinhaltet, zu dem eine Mitnehmerhülse (6) und eine Zentrierungshülse (7) an den Enden (3) befestigt sind, und außerdem eine unzertrennliche Verbindung der Schalen (1) mit der Hülsen-Armierungs-Gruppe (3) gewährt wird. Eine Hülsen-Armierungs-Gruppe (3), die den durch die Schalen (1) begrenzten Raum füllt, wird durch eine der Hülsen (6,7) und Öffnungen (11) im Abstandsrohr (4) mit einem entsprechenden Füllmittel (10) aufHarzbasis gefüllt.

2. Eine linsenartig konvexe kreisförmige Klappe des Klappenventils, die koaxiale Öffnungen zur Befestigung der Antriebswelle und der Stützachse besitzt, **dadurch gekennzeichnet dass** sie zwei symmetrische Schalen (1) umfasst, die unzertrennlich mit der Hülsen-Armierungs-Gruppe (3) verbunden sind, welche aus einem Abstandsrohr (4) mit Öffnungen (11) und befestigten Rippen (5), einer Mitnehmerhülse (6), einer Zentrierungshülse (7) besteht, und zwischen den Schalen (1) auf dem Abstandsrohr (4) befestigt ist, und dass der Raum zwischen den Schalen (1) mit einem entsprechenden Füllmittel (10) insbesondere auf Harzbasis gefüllt ist.

## Revendications

1. Le mode de réalisation d'un disque de vanne à papillon, par laquelle, dans le processus de formage de tôle on obtient deux chapes symétriques et convexes (1), sous forme de cercles, ayant sur leurs périmètres des encoches (2) et on place entre ces chapes un ensemble de douilles d'armature (3) se composant d'un tuyau de distance (4) fixé avec des nervures (5), auquel est fixé une douille de prise (6) et une douille de centrage (7) aux extrémités (3) et un raccord indissoluble des chapes (1) avec l'ensemble de douilles d'armature (3). L'ensemble de douilles d'armature (3) remplissant l'espace entre les chapes (1) par l'une des douilles (6,7) et trous (11) dans le tuyau de distance (4) d'un mélange approprié (10), conçu sur la base de résines.

2. Le disque circulaire qui a une forme convexe et lenticulaire avec des trous coaxiaux servant à fixer, à l'intérieur du disque, un arbre de transmission et un axe d'appui, se **caractérise par** deux chapes symétriques (1) rattachées à l'ensemble de douilles d'armature (3) d'une façon indissoluble, l'ensemble constitue un tuyau de distance (4) avec des trous (11) et des nervures fixées (5), une douille de prise (6), et une douille de centrage (7), fixées entre les chapes (1) sur le tuyau de distance (4), et l'espace entre les chapes (1) rempli d'un mélange approprié (10), avant tout sur la base de résines.
